# EUROPEAN PATENT SPECIFICATION

(11) **EP 3 182 302 B1**
(45) Date of publication and mention of the grant of the patent: **15.12.2021**
(21) Application number: 16183539.2
(22) Date of filing: 10.08.2016
(51) Int. Cl.: G06F 16/957

(54) **APPARATUS AND METHOD FOR SHARING STATE INFORMATION OF WEB BROWSER IN ELECTRONIC DEVICE**
VORRICHTUNG UND VERFAHREN ZUR GEMEINSAMEN NUTZUNG DER ZUSTANDSINFORMATION EINES WEB-BROWSERS IN EINER ELEKTRONISCHEN VORRICHTUNG
APPAREIL ET PROCÉDÉ DE PARTAGE D'INFORMATIONS D'ÉTAT DE NAVIGATEUR WEB DANS UN DISPOSITIF ÉLECTRONIQUE

(30) Priority: 14.12.2015 US 201514968624; 20.05.2016 KR 20160062195
(43) Date of publication of application: 21.06.2017
(73) Proprietor: Samsung Electronics Co., Ltd., Suwon-si, Gyeonggi-do 16677 (KR)
(72) Inventor: SHU, Chang, Acton, MA Massachusetts 01720 (US); GOMBOS, Laszlo, Winchester, MA Massachusetts 01890 (US)
(74) Representative: HGF

(56) References cited:
- US-A1- 2004 133 848
- US-A1- 2011 022 945
- US-A1- 2015 046 832
- None

## Description

### TECHNICAL FIELD

The present application relates generally to a browser-capable electronic device and, more specifically, to an apparatus and a method for transferring enhanced browser state information between browser-capable electronic devices.

### BACKGROUND

Many electronic devices (e.g., computers, smartphones, smart TVs, tablet computers) communicate with another electronic device and move a task from one electronic device to another. For example, a user can start browsing a web page on a smartphone and pick up the same link on a tablet or a laptop computer. However, conventional systems that transfer web browser state information are essentially limited to transmitting a uniform resource locator (URL) of the current browsing webpage. Although a user may be able to continue browsing the same website, key information of the browser state are missing. By way of example, scroll position is lost. The user must start from the beginning of the webpage and scroll to the same location on the webpage at which he or she paused when initiating the transfer to another device. Also, session information is lost. For example, user may be forced to re-enter a username and a password if the webpage is a secure one. Alternatively, the user may be forced to restart a shopping process from the beginning. Also, form data is not preserved, so the user must re-enter all input data if the user stopped in the middle of the filling-in the form on the first device.

This problem is further complicated by the fact that electronic devices use many different screen sizes. Even if an electronic device loads the same webpage as another electronic device, the layout of the webpage content on the electronic device may be significantly different from the another electronic device. Scrolling to the same relative position of a viewport does not guarantee the same content shows in the view. Another problem is the content of the webpage itself. If the two electronic devices differ significantly, the same URL may retrieve different web content (e.g., mobile vs. desktop version) of the same website.

Therefore, there is a need in the art for an improved apparatus and method for transferring state information of a web browser from an electronic device to another electronic device. In particular, there is a need for an apparatus and method for transferring scroll position and form content between browser-capable processing systems.

US 2015/046832 discloses techniques for sharing and consuming web content across multiple computing devices. Each device registers with an account on a cloud-based service using a unique identifier. When one of the registered devices requests a web page, a set of rules is processed by the cloud-based service to determine whether the page content should be shared with other registered devices. If the rules are satisfied, the cloud-based service requests and receives the content from a content provider in various formats that are compatible with each of the registered devices. Once all assets associated with the content are received by the cloud-based service, the content is shared by pushing the content out to each registered device in the compatible format.

US 2004/133848 discloses a system and method for providing and displaying information content.

US 2011/022945 discloses a method and apparatus of browsing modeling.

### SUMMARY

The scope of the present invention is defined by the claims. To address the above-discussed deficiencies of the prior art, it is a primary object to provide a user device comprising: i) a memory configured to store a browser application; and ii) a processor configured to execute the browser application, identify browser state information, and transfer the browser state information to a second user device. The browser state information comprises: a) a URL of a current webpage; and b) scroll position information associated with a current viewing rectangle in the current webpage, wherein the scroll position information comprises a scroll position of context text closest to a top-left corner of the current viewing rectangle.

In an advantageous embodiment, the scroll position information comprises a scroll position of an image element closest to a top-left corner of the current viewing rectangle.

It is another primary object to provide a method for use in a user device comprising a memory configured to store a browser application and a processor configured to execute the browser application. The method comprises: i) identifying browser state information; and ii) transferring the browser state information to a second user device. The browser state information comprises: a) a URL of a current webpage; and b) scroll position information associated with a current viewing rectangle in the current webpage, wherein the scroll position information comprises a scroll position of context text closest to a top-left corner of the current viewing rectangle.

It is another primary object to provide a non-transitory computer readable medium configured to control a processor to perform a method of transferring browser state information from a sending user device to a receiving user device. The method comprises: i) identifying browser state information in the sending user device; and ii) transferring the browser state information from the sending user device to the receiving user device. The browser state information comprises a) a URL of a current webpage; and b) scroll position information associated with a current viewing rectangle in the current webpage, wherein the scroll position information comprises a scroll position of context text closest to a top-left corner of the current viewing rectangle.

An electronic device supporting an application includes a memory configured to store an application representing a webpage and a processor configured to execute the stored application, identify state information of the application and transfer the state information to another electronic device. The state information comprises a uniform resource locator (URL) of the webpage, cookie data of the URL, and position information of a scroll associated with a viewport in the webpage. The position information comprises a position of the scroll corresponding to an item closest to a predefined point of the viewport.

For use in an electronic device comprising a memory configured to store an application representing a webpage and a processor configured to execute the stored application, a method includes identifying state information of the application and transferring the state information to another electronic device. The state information comprises a URL of the webpage, cookie data of the URL, and position information of a scroll associated with a viewport in the webpage. The position information comprises a position of the scroll corresponding to an item closest to a predefined point of the viewport.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates a communication network in which browser-capable electronic devices exchange browser state information according to an embodiment of the disclosure.
FIGURE 2 illustrates two browser-capable electronic devices exchanging enhanced browser state information according to an embodiment of the disclosure.
FIGURE 3 illustrates a viewport represented in a display of an electronic device according to an embodiment of the disclosure.
FIGURE 4 illustrates an exemplary electronic device according to an embodiment of the disclosure.
FIGURES 5A and 5B are a flow diagram illustrating gathering and transmitting of browser state information by a transmitting device according to an embodiment of the disclosure.
FIGURE 6 is a flow diagram illustrating gathering and transmitting of browser state information by a transmitting device according to another embodiment of the disclosure.
FIGURE 7 is a flow diagram illustrating receiving and processing browser state information by a receiving device according to one embodiment of the disclosure.

### DETAILED DESCRIPTION

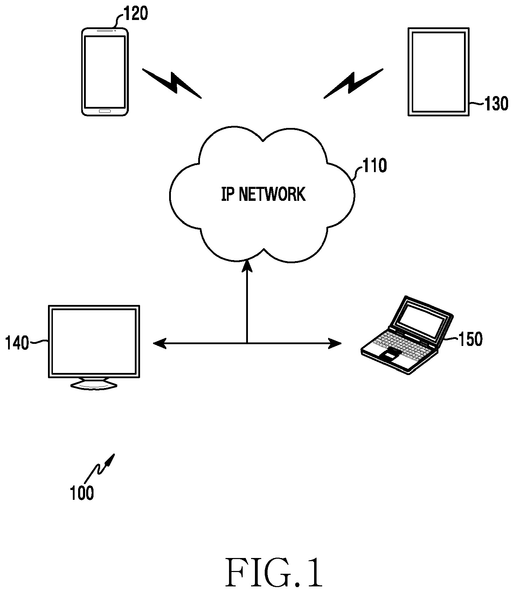

FIGURES 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged browser-capable electronic device.

This present disclosure provides an improved web browser application that restores the browser to its full previous state after the browser state information is transferred from a first device to a second device. The enhanced browser state information includes: i) a uniform resource locator (URL) of the browsing website; ii) scroll position of the webpage using a heuristic approach; iii) session information of the webpage using cookies; iv) form data for the webpage; and v) web state and session transfer between vastly different devices/form factors (PC, mobile, tablet, TV, head mounted device, wearable).

FIGURE 1 illustrates communication network 100 in which browser-capable electronic devices 120, 130, 140, and 150 exchange browser state information according to an embodiment of the disclosure. In the exemplary embodiment, electronic device 120 is assumed to be mobile phone 120, electronic device 130 is assumed to be tablet 130, electronic device 140 is assumed to be smart television (TV) 140, and electronic device 150 is assumed to be laptop personal computer (PC) 150. According to the principles of the present disclosure, electronic devices 120, 130, 140, and 150 exchange the enhanced browser state information via Internet protocol (IP) network 110, such as Internet 110, or home network 110. It is noted that mobile phone 120, tablet 130, smart TV 140, and laptop PC 150 have different screen sizes and resolutions, and are operated by different input devices.

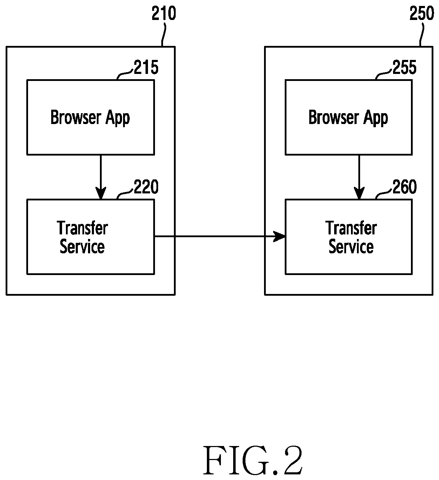

FIGURE 2 illustrates two browser-capable electronic devices 210 and 250 exchanging enhanced browser state information according to an embodiment of the disclosure. Each of electronic devices 210 and 250 may be any one of mobile phone 120, tablet 130, smart TV 140, and laptop PC 150. It is assumed in FIGURE 2 that electronic device 210 is the first (i.e., original, sending, transmitting) device 210. It is assumed in FIGURE 2 that electronic device 250 is the second (i.e., receiving) device 250. When a user initiates a transfer action from browser application 215 of transmitting device 210, browser application 215 of transmitting device 210 starts to collect all the enhanced state information described above.

Browser application 215 of transmitting device 210 then composes the enhanced state information into a text message and sends the text message over to the receiving device 250 through a communication link, such as the Transfer service on Samsung smartphones and tablets. In FIGURE 2, Transfer service 220 in transmitting device 210 establishes a communication link with Transfer service 260 in receiving device 250. The communication link transmits the text message containing the enhanced state information and prompts the user on receiving device 250. Browser application 255 is launched on receiving device 250, which prepares to restore the webpage state received from Transfer service 260. First, browser application 255 of receiving device 250 restores the cookies for the website. Next, browser application 255 of receiving device 250 loads the URL. After the webpage is fully loaded, browser application 255 of receiving device 250 restores the other browser states, including scroll position, form data, and zoom level.

The present disclosure describes below how the scroll position information is collected from browser application 215 of transmitting device 210 and how the scroll position information is restored in browser application 255 of receiving device 250. The scroll position restoration process provided by the present disclosure comprises a heuristic approach. Browser application 215 of transmitting device 210 first identifies a context text string in the original webpage that can specify the scroll offset of the current page. Transmitting device 210 transfers a signal comprising information on the identified context text string. After receiving device 250 receives the signal from transmitting device 210, browser application 215 of transmitting device 210 searches for the same text in browser application 255 of receiving device 250 and scrolls the page to reveal the context text.

This text-based scroll position restoration works even if: i) the layout of the web page on receiving device 250 is different from transmitting device 210; ii) the content of the web page on receiving device 250 is not identical to transmitting device 210 (i.e., different content for different browsers, dynamic news content, different web banners, etc.). The transfer of enhanced browser state information works best in local area networks (e.g., home networks), because the public-facing IP address does not change between saving and restoring the client session. Thus, the originating webpage server does not detect the transfer.

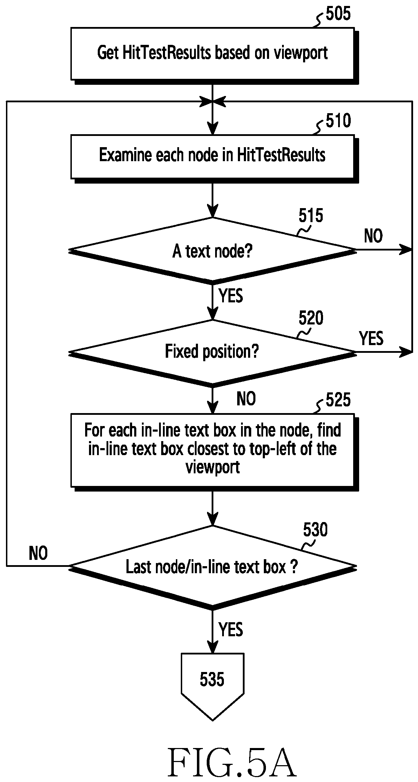

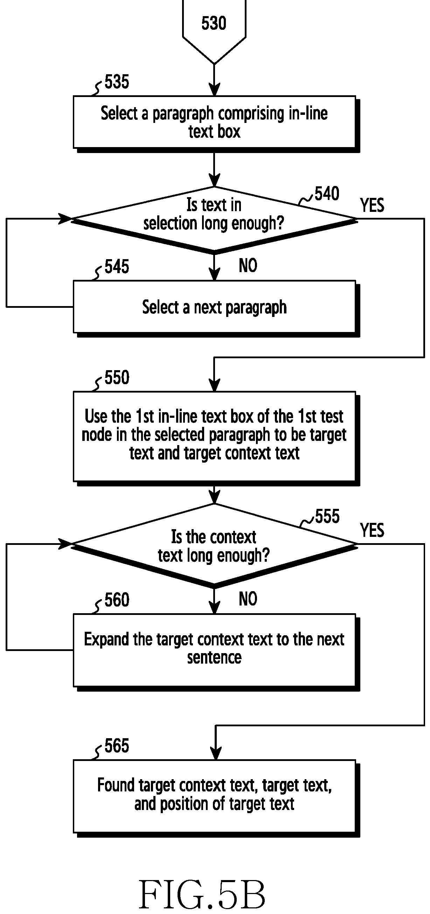

Collecting Scroll Position Information - Initially, browser application 215 of transmitting device 210 collects the scroll position information that is used to restore the scroll position on browser application 255 of receiving device 250. In addition to the coordinates-based scroll position, browser application 215 of transmitting device 210 also determines the context text. In essence, browser application 215 of transmitting device 210 searches for and identifies some text with enough content on the top-left corner of the viewport of transmitting device 210. The details are illustrated in FIGURE 5A and 5B below. When the viewport is composed mostly of images, the source URL of the top-left image may be used. However, a point that browser application 215 of transmitting device 210 detects and identifies an item such as the text and the source URL of the image may be not limited to the top-left corner of the viewport and be predefined various point. For example, the predefined various point may be top-right corner of the viewport, bottom-left corner of the viewport, bottom-right corner of the viewport.

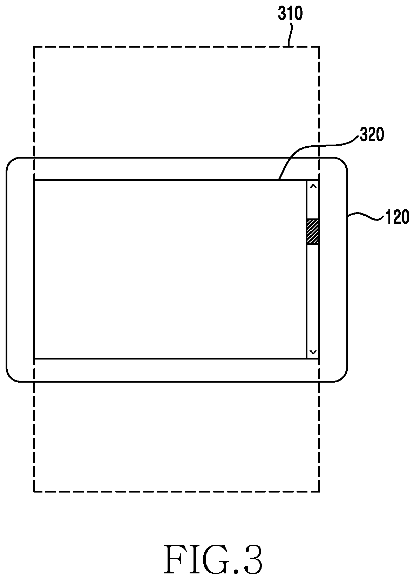

The viewport means whole webpage or part of the whole webpage displayed through an electronic device. For example, the viewport may the part of the whole webpage as shown in FIGURE 3. FIGURE 3 illustrates a viewport represented in a display of an electronic device according to an embodiment of the disclosure. If a user connects to webpage 310 using electronic device 120, a part of webpage 310 is displayed due to a limit of resolution and a size of a display of electronic device 120. The part of displayed webpage 310 is referred to 'viewport'. In other words, viewport 310 is referred to a region the user looks through the display of electronic device 120. As a result, viewport 320 may be referred to 'a display region', 'a part of a webpage', 'browser window', and so on.

In some embodiments, viewport 320 may be webpage 310 according to a size of webpage 310 and hardware performance of the display of electronic device 120. Also, in other embodiments, viewport 320 may be referred to a region represented by a vertical axis and a horizontal axis of webpage 310.

Compose Scroll Position Information - Browser application 215 of transmitting device 210 determines the complete scroll position information, which may be composed of several fields that are shown in TABLE 1. In an exemplary embodiment, the data fields may be put together in a JSON format along with other browser state information and may be sent to browser application 255 of receiving device 250.

**TABLE 1**

| Data field | Meaning |
|---|---|
| isImage | Indicates if the scrollToText is from image source URL. |
| scrollToText | The text of the 1st InlineTextBox in the context text sentences, if isImage is false or the text of the image source URL if isImage is true. |
| scrollToContextText | The text of the context text sentences. |
| scrollToTextPositionInView | The position of the scrollToText relative to the viewport. |
| scrollViewPosition | Scroll position relative to the document content in the viewport. |

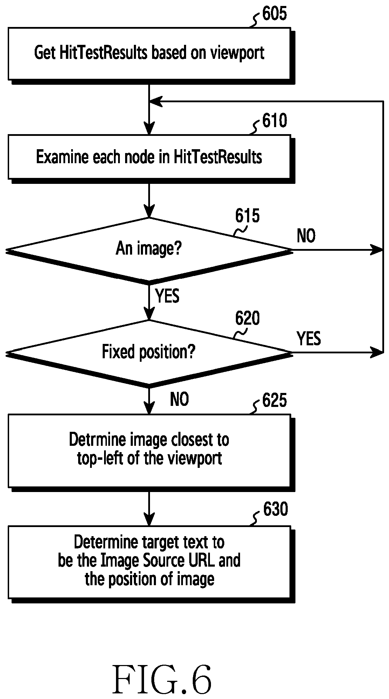

Restore Scroll Position - After the enhanced browser state information is transferred to receiving device 250, browser application 255 of receiving device 250 uses the transferred browser state information in the text message to restore the scroll position. The scroll position is restored after the URL is successfully loaded. Browser application 255 of receiving device 250 performs a text search on the webpage or a text match with the image source URL (if the "islmage" field is "True"), and scrolls to the position where a match is found. The details are illustrated FIGURES 5 and 6 below.

Cookie Transfer - Browser application 215 of transmitting device 210 also transfers the cookies of the current URL to receiving device 250 in order to restore the session state of the webpage using browser application 255 of receiving device 250. In an exemplary embodiment, a cookie having the properties in TABLE 2 may be transferred to receiving device 250.

**TABLE 2**

| | |
|---|---|
| Name | Name of the cookie |
| Value | Value of the cookie |
| domain | Specifies the domain of the site |
| path | Specifies the directory path the cookie belongs to |
| expiryDate | Specifies the expiration time of the cookie in greenwich mean time (GMT) format |
| isSecure | Indicates whether to transmit the cookie over https |
| isHttpOnly | Specifies whether a cookie is accessible by client-side script |

Form Data Transfer - Browser application 215 of transmitting device 210 collects Form Data using conventional Web APIs. Browser application 255 of receiving device 250 restores the form with filled-in data on the remote device.

In some embodiments described with reference to FIGURE 2, a subject in each step is browser application 215 of transmitting device 210 or browser application 255 of receiving device 250. Browser application 215 and browser application 255 is an example as a logical subject. In an aspect of hardware, it may be understood that a method illustrated in FIGURE 2 is implemented by transmitting device 210 or receiving device 250.

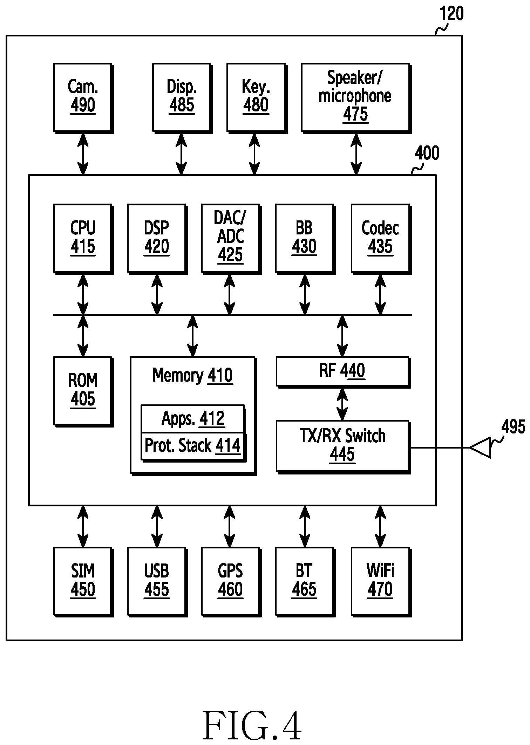

FIGURE 4 illustrates an exemplary electronic device according to an embodiment of the disclosure. Electronic device 120 may be a mobile phone. Electronic device 120 is also representative of tablet 130, smart TV 140, and laptop computer 150. Electronic device 120 may operate as either transmitting device 210 or receiving device 250 by exchanging enhanced browser state information according to the principles of the disclosure.

Electronic device 120 comprises core circuitry 400, which includes read-only memory (ROM) 405, random access memory (RAM) 410, central processing unit (CPU) 415, digital signal processor (DSP) 420, digital-to-analog converter (DAC)/analog-to-digital converter (ADC) circuitry 425, baseband (BB) circuitry block 430, codec circuitry block 435, radio frequency (RF) circuitry block 440, transmit (TX)/receive (RX) switch 445, and antenna 495.

In one embodiment, ROM 405 may store a boot-routine and other static data and RAM 410 may store an operating system (not shown), applications 412, and protocol stack 414. In an advantageous embodiment, ROM 405 and RAM 410 may comprise a single electronically erasable memory, such as a Flash memory, that is used in conjunction with a conventional RAM memory that is used to store dynamic data. Applications 412 in memory may include a social presence application (i.e., RCS Presence) that interacts with carrier SP server 150, an IP multimedia subsystem (IMS) framework that delivers IP multimedia services, a Calendar application that communicates with calendar server 160, and specific Social Network Site (SNS) applications, and the like that enable electronic device 120 to exchange SP information with mobile phones used by other subscribers.

Importantly, applications 412 in memory may include a browser application that is executed under control of CPU 415 in order to exchange and process the enhanced state information according to the principles of the present disclosure. Thus, CPU 415 performs the functions described herein for both browser application 215 of transmitting device 210 and browser application 255 of receiving device 250.

Electronic device 120 further comprises SIM card interface 450, USB interface 455, GPS receiver 460, Bluetooth (BT) transceiver 465, WiFi (or WLAN) transceiver 470, speaker and microphone circuitry block 475, keyboard 480, display 485, and camera 490. In some embodiment, keyboard 480 and display 485 may be implemented together as a touch screen display.

CPU 415 is responsible for the overall operation of electronic device 120. In an exemplary embodiment, CPU 415 executes applications 412 and protocol stack 414. CPU 415 runs the application layer and a wide variety of applications may be run in a smart phone implementation. Applications 412 may include audio, video, browser, and image/graphics applications. CPU 415 may run applications 412 that support various audio formats such as MP3, MP4, WAV, and rm. CPU 415 may run image applications 412 that support JPEG image formats and video applications 412 that support video formats (e.g., MPEG-1 to MPEG-5). CPU 415 may support various operating systems (not shown), such as Symbian, java, android, RT-Linux, Palm, and the like. For time critical applications, CPU 415 runs a real-time operating system (RTOS). In addition to the physical layer, there are other layers, including protocol stack 414, that enable electronic device 120 to work with a network base station. In an exemplary embodiment, protocol stack 414 is ported on CPU 415.

DAC/ADC circuitry block 425 converts analog speech signals to digital signals, and vice versa, in electronic device 120. In the transmit path, the ADC-converted digital signal is sent to a speech coder. Various types of ADCs are available, including sigma delta type. Automatic gain control (AGC) and automatic frequency control (AFC) are used in the receive path to control gain and frequency. AGC helps maintain satisfactory DAC performance by keepings signals within the dynamic range of the DAC circuits. AFC keeps frequency error within limit to achieve better receiver performance.

Baseband (BB) circuitry block 430 may be implemented as part of DSP 420, which executes many of the baseband processing functions (i.e., physical layer, Layer 1, or L1 functions). BB circuitry block 400 may be ported on DSP 420 to meet the latency and power requirements of electronic device 120. BB circuitry block 430 converts voice and data to be carried over the air interface to I/Q baseband signals.

BB circuitry block 430 may support one of various air interface standards, such as GSM, CDMA, Wimax, LTE, HSPA, and others. BB circuitry block 430 is often referred to as the physical layer, or Layer 1, or L1. For mobile phones that work on GSM networks, the baseband part (Layer 1) running on DSP 420 and the protocol stack 414 running on CPU 415 are based on the GSM standard. For CDMA mobile phones, the Layer 1 and protocol stack 414 are based on the CDMA standard, and so on, for the LTE and HSPA standards-based mobile phones.

For speech or audio inputs, codec circuitry block 435 may compress and decompress the signal to match the data rate to the frame in which the data is sent. By way of example, codec circuitry block 435 may convert speech at an 8 KHz sampling rate to a 13 kbps rate for a full rate speech traffic channel. To do this, a residually excited linear predictive coder (RELP) speech coder may be which compresses 260 bits into a 20 millisecond duration to achieve a 13 kbps rate.

The baseband or physical layer adds redundant bits to enable error detection as well as error correction. Error detection may be obtained with CRC and error correction using forward error correction techniques, such as a convolutional encoder (used in transmitter path) and a Viterbi decoder (used in receive path). Interleaving may be done for the data, which helps in spreading the error over time, thereby helping the receiver de-interleave and decode the frame correctly.

RF circuitry block 440 includes an RF up-converter and an RF down-converter. For a GSM system, the RF up-converter converts modulated baseband signals (I and Q) either at zero intermediate frequency (IF) or some IF to RF frequency (890-915 MHz). The RF down-converter converts RF signals (935 to 960 MHz) to baseband signals (I and Q). For a GSM system, gaussian minimum shift keying (GMSK) modulation is used.

Antenna 495 is a metallic object that converts and electro-magnetic signal to and electric signal and vice versa. Commonly used antennas may include a helix type, a planar inverted F-type, a whip, or a patch type. Microstrip patch type antennas are popular among mobile phones due to small size, easy integration on a printed circuit board and multi-frequency band of operation. In a preferred embodiment of electronic device 120, antenna 495 may support different wire-area standards, including GSM, CDMA, LTE, and WiMAX, as well as short-range standards, including WiFi (WLAN), Bluetooth, and so on.

If antenna 495 comprises only one antenna used for both transmit and receive operations at different times, the TX/RX switch 445 couples both the transmit (TX) path and the receive (RX) path to antenna 495 at different times. TX/RX switch 445 is controlled automatically by DSP 420 based on a GSM frame structure with respect to the physical slot allocated for that particular GSM mobile phone in both the downlink and the uplink. For frequency division duplexing (FDD) systems, TX/RX switch 445 may be implemented as a diplexer that acts as filter to separate various frequency bands.

Electronic device 120 provides connectivity with laptops or other devices using WiFi (or WLAN) transceiver 470, BT transceiver 465, and universal serial bus (USB) interface 455. Electronic device 120 also uses GPS receiver 460 in applications 412 that require position information. If electronic device 120 is a conventional smart phone, applications 412 may include many popular applications, such as a browser, and numerous games that come preinstalled with electronic device 120.

Speaker and microphone circuitry block 475 comprises microphone circuitry (or mic) that converts acoustic energy (i.e., air pressure changes caused by speech or other sounds) to electrical signals for subsequent processing. Speaker and microphone 475 further comprises speaker circuitry that converts an electrical audio signal to an audible signal (pressure changes) for human hearing. The speaker circuitry may include an audio amplifier to get required amplification of the audio signal and may further include a volume control circuit to change (increase or decrease) the amplitude of the audio signal.

Electronic device 120 preferably includes camera 490. Presently, almost all mobile phones feature a camera module. Camera 490 may comprise a 12 megapixel, 14 megapixel, or a 41 megapixel camera.

Display 485 may comprise, by way of example, a liquid crystal display (LCD), a thin-film transistor (TFT) screen, and organic light emitting diode (OLED) display, a thin film diode (TFD) display, or a touch screen of capacitive and resistive type.

In a simple embodiment, keypad 480 may comprise a simple matrix type keypad that contains numeric digits (0 to 9), alphabetic characters (A to Z), special characters, and specific function keys. In a more advanced embodiment for a smart phone implementation, keypad 480 may be implemented in the mobile phone software, so that keyboard 480 appears on display 485 and is operated by the user using the touch of a finger tip.

In FIGURES 5A and 5B, FIGURE 6 and FIGURE 7, the methods described find the context text from the web page on the transferring device, get HitTestResults based on the viewport of the transferring device, and scan through the text nodes of HitTestResult, while ignoring fixed-position text nodes. For each text node, the method scans through the InlineTextBoxes of each text mode and determines the one closest to the top-left corner of the viewport among all the HitTestResults. The distance function is 10*Y+X gives nodes close to top-right some advantage. Based on the target text node found above, the method determines the first long-enough paragraph as a candidate paragraph. Starting from the first InlineTextBox in a candidate paragraph, the method finds the sentences with long-enough text and uses these sentences as final context text.

If a webpage has mostly images, then the methods described get HitTestResults based on the viewport, scan through the image elements of HitTestResult, while ignoring fixed-position images. The methods determine the image element closest to the top-left corner of the viewport. Again, the distance function is 10*Y+X, giving nodes close to top-right some advantage. The method uses the imageSourceURL as the final context text.

In FIGURES 5A and 5B, FIGURE 6 and FIGURE 7, the described methods use a combination of text search and coordinates adjustments when restoring scroll position on the receiving device. There is no need to do a text search if the original scroll position is 0. Otherwise, the methods perform a text search on the web content or source URLs of images based on the original text source. A text match may be based on exact match or a degree of similarity match. The methods also perform an additional adjustment based on the position of the original text relative to the viewport.

FIGURES 5A and 5B are a flow diagram illustrating gathering and transmitting of browser state information by transmitting device 210 according to an embodiment of the disclosure. Initially, browser application 215 of transmitting device 210 identifies nodes in the viewport of the browser screen. The nodes are stored in the record HitTestResults based on the viewport (step 505).

Browser application 215 of transmitting device 210 examines each node in HitTestResults (step 510). Browser application 215 of transmitting device 210 determines if the node is a text node (step 515). If the node is not a text node (No in 515), then browser application 215 of transmitting device 210 examines the next node in HitTestResults (step 510). If the node is a text node (Yes in 515), then browser application 215 of transmitting device 210 determines if the text node has a fixed position (step 520). If the text node does have a fixed position (Yes in 420), then browser application 215 of transmitting device 210 examines the next node (step 510). If the text node does not have a fixed position (No in 520), then browser application 215 of transmitting device 210 determines, for each in-line text box in the node, which in-line text box is closest to the top-left of the viewport (step 525).

Browser application 215 of transmitting device 210 then determines if the last node is examined or in-line text box is closest to the top-left of the viewport (step 530). If not, (No in 530), browser application 215 of transmitting device 210 examines the next node in HitTestResults (step 510). If the last node is examined or in-line text box is closest to the top-left of the viewport, browser application 215 of transmitting device 210 ends the search loop in FIGURE 5A and moves to item 440 in FIGURE 5B.

Next, browser application 215 of transmitting device 210 selects paragraph comprising the in-line text box (step 535). Browser application 215 of transmitting device 210 then determines if the text in the selected paragraph is long enough (step 540). If the text is not long enough (No in 540), browser application 215 of transmitting device 210 selects the next paragraph (step 545) and returns to step 540. If the text is long enough (Yes in 540), browser application 215 of transmitting device 210 uses the first in-line text box of the first selected test node to be the target text and the target context text (step 550).

Browser application 215 of transmitting device 210 then determines if the context text is long enough (step 555). If the context text is not long enough (No in 540), browser application 215 of transmitting device 210 expands the target contest text to the next sentence (step 560) and returns to step 555. If the context text is long enough (Yes in 540), browser application 215 of transmitting device 210 determines that it has found the target context text, the target text, and the position of the target text (step 565). This is part of the enhance browser state information that is transferred to browser application 255 of receiving device 250.

In some embodiments described with reference to FIGURE 5a and 5b, a subject in each step is browser application 215 of transmitting device 210 or browser application 255 of receiving device 250. Browser application 215 and browser application 255 is an example as a logical subject. In an aspect of hardware, it may be understood that a method illustrated in FIGURE 5a and 5b is implemented by transmitting device 210 or receiving device 250.

FIGURE 6 is a flow diagram illustrating gathering and transmitting of browser state information by transmitting device 210 according to another embodiment of the disclosure. Initially, browser application 215 of transmitting device 210 identifies nodes in the viewport of the browser screen. The nodes are stored in the record HitTestResults based on viewport (step 605).

Browser application 215 of transmitting device 210 examines each node in HitTestResults (step 610). Browser application 215 of transmitting device 210 determines if the node is an image element (step 615). If the node is not an image element (No in 615), then browser application 215 of transmitting device 210 examines the next node in HitTestResults (step 610). If the node is an image element (Yes in 615), then browser application 215 of transmitting device 210 determines if the image element has a fixed position (step 620). If the image element does have a fixed position (Yes in 620), then browser application 215 of transmitting device 210 examines the next node (step 610). If the image element does not have a fixed position (No in 620), then browser application 215 of transmitting device 210 determines which image element is closest to the top-left of the viewport (step 625). Browser application 215 of transmitting device 210 ends the search loop (step 630) and determines that is has found the target text corresponding to the image source URL and the position of the image element.

In some embodiments described with reference to FIGURE 6, a subject in each step is browser application 215 of transmitting device 210 or browser application 255 of receiving device 250. Browser application 215 and browser application 255 is an example as a logical subject. In an aspect of hardware, it may be understood that a method illustrated in FIGURE 6 is implemented by transmitting device 210 or receiving device 250.

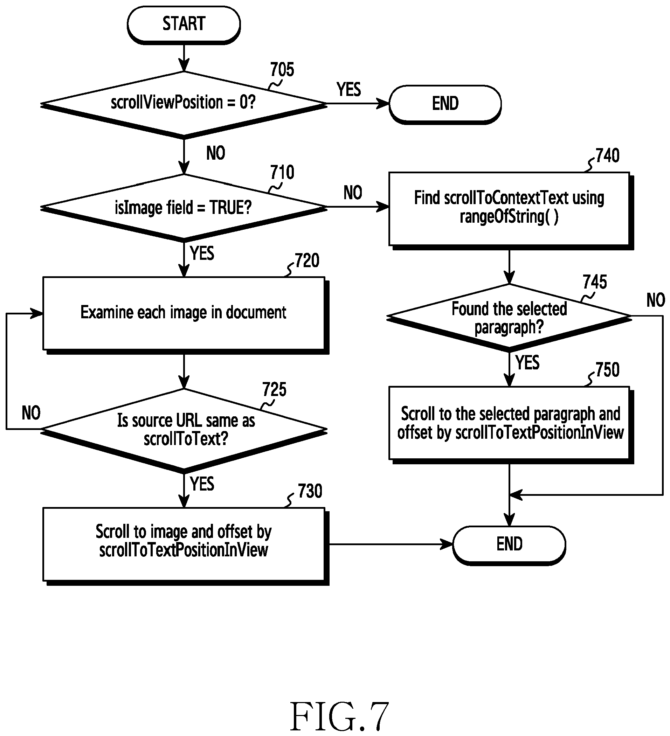

FIGURE 7 is a flow diagram illustrating receiving and processing browser state information by receiving device 250 according to one embodiment of the disclosure. Initially, browser application 255 of receiving device 250 determines if the data field scrollViewPosition from TABLE 1 is equal to 0 (step 705). If not (No in 705), then browser application 255 of receiving device 250 determines if data field isImage from TABLE 1 is TRUE (step 710).

If the isImage data field is TRUE (Yes in 710), browser application 255 of receiving device 250 examines each image element in the document (e.g. webpage) (step 720). Browser application 255 of receiving device 250 determines if the source URL is the same as the data field scrollToText from TABLE 1 (step 725). If not (No in 725), browser application 255 of receiving device 250 returns to step 720. If the source URL is the same as the data field scrollToText (Yes in 725), then browser application 255 of receiving device 250 scrolls to the image element and offsets by the value in data field scrollToTextPositionInView from TABLE 1 (step 730).

If the Islmage data field is not TRUE (No in 710), then browser application 255 of receiving device 250 determines the value in data field scrollToContextText in TABLE 1 (step 740). For example, browser application 255 of receiving device 250 may determine data field scrollToContextText in TABLE 1 using the value in the rangeOfString() data field. If a next paragraph is not selected (No in 745), browser application 255 of receiving device 250 ends the process. If a next paragraph is selected (Yes in 745), browser application 255 of receiving device 250 scrolls to the selected paragraph and offsets by the value in the data field scrollToTextPositionInView (step 750).

In some embodiments described with reference to FIGURE 7, a subject in each step is browser application 215 of transmitting device 210 or browser application 255 of receiving device 250. Browser application 215 and browser application 255 is an example as a logical subject. In an aspect of hardware, it may be understood that a method illustrated in FIGURE 7 is implemented by transmitting device 210 or receiving device 250.

It will be appreciated that various embodiments of the present disclosure as described in the specification may be realized in the form of hardware, software or a combination of hardware and software. The software may be stored in a non-transitory computer readable storage medium configured to store one or more application programs (software modules). The application programs comprise computer-executable instructions that cause a processor in an electronic device to perform a method of the present disclosure. Accordingly, exemplary embodiments provide a program comprising code for implementing an apparatus or a method as described and claimed herein and a non-transitory machine-readable storage storing such a program. Alternatively, the functionality herein may be implemented by as an Integrated Circuit (ID) or any combination of one or more processors and ICs.

The computer-executable instructions may be stored in the form of volatile or nonvolatile storage such as, for example, a storage device like a read-only memory (ROM), random access memory (RAM), memory chips, device or integrated circuits or on an optically or magnetically readable medium such as, for example, a compact disk (CD), digital versatile disk (DVD), magnetic disk, magnetic tape, or the like. It will be appreciated that the storage devices and storage media are various embodiments of non-transitory machine-readable storage that are suitable for storing a program or programs comprising instructions that, when executed, implement various embodiments of the present disclosure.

Although the present disclosure has been described with an exemplary embodiment, various changes and modifications may be suggested to one skilled in the art. It is intended that the present disclosure encompass such changes and modifications as fall within the scope of the appended claims.

## Claims

1. An electronic device (120, 210) supporting an application (215) comprising:
a memory (410) configured to store a browser application (215) representing a webpage (310); and
a processor (415) configured to:
execute the browser application (215) and display a viewport of a webpage (310),
collect position information of a scroll associated with the viewport (320) in the webpage (310), and identify whether a content item is a text item or an image element and whether the content item has a fixed position in the viewport (320), wherein the identified content item is a content item closest to a predefined point of the viewport of the webpage (310) that corresponds to coordinate-based position information of the scroll,
wherein, when the identified content item is the text item without the fixed position, the collected position information comprises the coordinate-based scroll position information and corresponding text content of the text item,
wherein, when the identified content item is the image element without the fixed position, the collected position information comprises the coordinate-based scroll position information and a text of a source URL of the image element,
identify state information of the browser application (215) and transfer the state information to another electronic device (250),
wherein the state information comprises a uniform resource locator, URL, of the webpage (310), cookie data of the URL, and the collected position information of the scroll associated with the viewport (320) in the webpage (310).

2. The electronic device as set forth in Claim 1, wherein the state information further comprises form data.

3. The electronic device as set forth in Claim 1, wherein the item is a text within an in-line text box.

4. The electronic device as set forth in Claim 1, wherein the processor transfers the state information of the web browser to the another electronic device using a text message.

5. For use in an electronic device (120, 210) comprising a memory (410) configured to store a browser application (215) representing a webpage (310) and a processor (415) configured to execute the stored browser application and display a viewport of a webpage, a method comprising:
collecting position information of a scroll associated with the viewport in the webpage, and identifying whether a content item is a text item or an image element and whether the content item has a fixed position in the viewport (320), wherein the identified content item is a content item closest to a predefined point of the viewport of the webpage (310) that corresponds to coordinate-based position information of the scroll;
wherein, when the identified content item is the text item without the fixed position, the collected position information comprises the coordinate-based scroll position information and corresponding text content of the text item,
wherein, when the identified content item is the image element without the fixed position, the collected position information comprises the coordinate-based scroll position information and a text of a source URL of the image element;
identifying state information of the browser application (215); and
transferring the state information to another electronic device (250),
wherein the state information comprises a uniform resource locator, URL, of the webpage (310), cookie data of the URL and the collected position information of the scroll associated with the viewport (320) in the webpage (310).

6. The method as set forth in Claim5, wherein the state information further comprises form data.

7. The method as set forth in Claim 6, wherein the item is a text within an in-line text box.

8. The method as set forth in Claim 6, further comprising transferring the state information of the web browser to the another electronic device using a text message.

## Patentansprüche

1. Elektronisches Gerät (120, 210), das eine Anwendung (215) unterstützt, umfassend:
einen Speicher (410), der konfiguriert ist, um eine Browseranwendung (215) zu speichern, die eine Webseite (310) repräsentiert; und
einen Prozessor (415), der konfiguriert ist zum:
Ausführen der Browseranwendung (215) und Anzeigen eines Darstellungsbereichs einer Webseite (310),
Sammeln von Positionsinformationen eines Bildlaufes, der dem Darstellungsbereich (320) in der Webseite (310) zugeordnet ist, und Identifizieren, ob ein Inhaltselement ein Textelement oder ein Bildelement ist und ob das Inhaltselement eine feste Position im Darstellungsbereich (320) aufweist, wobei das identifizierte Inhaltselement ein Inhaltselement ist, das einem vordefinierten Punkt des Darstellungsbereichs der Webseite (310) am nächsten liegt, der koordinatenbasierten Positionsinformationen des Bildlaufes entspricht,
wobei, wenn das identifizierte Inhaltselement das Textelement ohne die feste Position ist, die gesammelten Positionsinformationen die koordinatenbasierten Bildlaufpositionsinformationen und den entsprechenden Textinhalt des Textelements umfassen,
wobei, wenn das identifizierte Inhaltselement das Bildelement ohne die feste Position ist, die gesammelten Positionsinformationen die koordinatenbasierten Bildlaufpositionsinformationen und einen Text einer Quell-URL des Bildelements umfassen,
Identifizieren von Zustandsinformationen der Browseranwendung (215) und Übertragen der Zustandsinformationen an ein anderes elektronisches Gerät (250),
wobei die Zustandsinformationen einen Uniform Resource Locator, URL, der Webseite (310), Cookie-Daten des URLs und die gesammelten Positionsinformationen des dem Darstellungsbereich (320) in der Webseite (310) zugeordneten Bildlaufes umfassen.

2. Elektronisches Gerät nach Anspruch 1, wobei die Zustandsinformationen ferner Formulardaten umfassen.

3. Elektronisches Gerät nach Anspruch 1, wobei das Element ein Text in einem Inline-Textfeld ist.

4. Elektronisches Gerät nach Anspruch 1, wobei der Prozessor die Zustandsinformationen des Webbrowsers unter Verwendung einer Textnachricht an das andere elektronische Gerät überträgt.

5. Zur Verwendung in einem elektronischen Gerät (120, 210), das einen Speicher (410), der konfiguriert ist, um eine Browseranwendung (215) zu speichern, die eine Webseite (310) repräsentiert, und einen Prozessor (415) umfasst, der konfiguriert ist, um die gespeicherte Browseranwendung auszuführen und einen Darstellungsbereich einer Webseite anzuzeigen, ein Verfahren umfassend:
Sammeln von Positionsinformationen eines Bildlaufes, der dem Darstellungsbereich in der Webseite zugeordnet ist, und Identifizieren, ob ein Inhaltselement ein Textelement oder ein Bildelement ist und ob das Inhaltselement eine feste Position im Darstellungsbereich (320) aufweist, wobei das identifizierte Inhaltselement ein Inhaltselement ist, das einem vordefinierten Punkt des Darstellungsbereichs der Webseite (310) am nächsten liegt, der koordinatenbasierten Positionsinformationen des Bildlaufes entspricht;
wobei, wenn das identifizierte Inhaltselement das Textelement ohne die feste Position ist, die gesammelten Positionsinformationen die koordinatenbasierten Bildlaufpositionsinformationen und den entsprechenden Textinhalt des Textelements umfassen,
wobei, wenn das identifizierte Inhaltselement das Bildelement ohne die feste Position ist, die gesammelten Positionsinformationen die koordinatenbasierten Bildlaufpositionsinformationen und einen Text einer Quell-URL des Bildelements umfassen;
Identifizieren von Zustandsinformationen der Browseranwendung (215); und
Übertragen der Zustandsinformationen an ein anderes elektronisches Gerät (250),
wobei die Zustandsinformationen einen Uniform Resource Locator, URL, der Webseite (310), Cookie-Daten des URLs und die gesammelten Positionsinformationen des dem Darstellungsbereich (320) in der Webseite (310) zugeordneten Bildlaufes umfassen.

6. Verfahren nach Anspruch 5, wobei die Zustandsinformationen ferner Formulardaten umfassen.

7. Verfahren nach Anspruch 6, wobei das Element ein Text in einem Inline-Textfeld ist.

8. Verfahren nach Anspruch 6, ferner umfassend das Übertragen der Zustandsinformationen des Webbrowsers unter Verwendung einer Textnachricht an das andere elektronische Gerät.

## Revendications

1. Dispositif électronique (120, 210) prenant en charge une application (215) comprenant :
une mémoire (410) configurée pour mémoriser une application de navigateur (215) représentant une page Web (310) ; et
un processeur (415) configuré pour :
exécuter l'application de navigateur (215) et afficher une fenêtre d'affichage d'une page Web (310), collecter des informations de position d'un défilement associé à la fenêtre d'affichage (320) dans la page Web (310) et identifier si un élément de contenu est un élément de texte ou un élément d'image et si l'élément de contenu a une position fixe dans la fenêtre d'affichage (320), dans lequel l'élément de contenu identifié est un élément de contenu le plus proche d'un point prédéfini de la fenêtre d'affichage de la page Web (310) qui correspond aux informations de position basées sur les coordonnées du défilement,
dans lequel, lorsque l'élément de contenu identifié est l'élément de texte sans la position fixe, les informations de position collectées comprennent les informations de position de défilement basées sur les coordonnées et le contenu textuel correspondant de l'élément de texte,
dans lequel, lorsque l'élément de contenu identifié est l'élément d'image sans la position fixe, les informations de position collectées comprennent les informations de position de défilement basées sur les coordonnées et un texte d'une URL source de l'élément d'image,
identifier les informations d'état de l'application de navigateur (215) et transférer les informations d'état à un autre dispositif électronique (250),
dans lequel les informations d'état comprennent un localisateur de ressources uniforme, une URL, de la page Web (310), des données de cookie de l'URL et les informations de position collectées du défilement associées à la fenêtre d'affichage (320) dans la page Web (310).

2. Dispositif électronique selon la revendication 1, dans lequel les informations d'état comprennent en outre des données de formulaire.

3. Dispositif électronique selon la revendication 1, dans lequel l'élément est un texte dans une zone de texte en ligne.

4. Dispositif électronique selon la revendication 1, dans lequel le processeur transfère les informations d'état du navigateur Web à l'autre dispositif électronique en utilisant un message texte.

5. Pour une utilisation dans un dispositif électronique (120, 210) comprenant une mémoire (410) configurée pour mémoriser une application de navigateur (215) représentant une page Web (310) et un processeur (415) configuré pour exécuter l'application de navigateur mémorisée et afficher une fenêtre d'affichage d'une page Web, procédé comprenant :
la collecte des informations de position d'un défilement associé à la fenêtre d'affichage dans la page Web, et l'identification si un élément de contenu est un élément de texte ou un élément d'image et si l'élément de contenu a une position fixe dans la fenêtre d'affichage (320), dans lequel l'élément de contenu identifié est un élément de contenu le plus proche d'un point prédéfini de la fenêtre d'affichage de la page Web (310) qui correspond à des informations de position basées sur les coordonnées du défilement ;
dans lequel, lorsque l'élément de contenu identifié est l'élément de texte sans la position fixe, les informations de position collectées comprennent les informations de position de défilement basées sur les coordonnées et le contenu textuel correspondant de l'élément de texte,
dans lequel, lorsque l'élément de contenu identifié est l'élément d'image sans la position fixe, les informations de position collectées comprennent les informations de position de défilement basées sur les coordonnées et un texte d'une URL source de l'élément d'image ;
l'identification des informations d'état de l'application de navigateur (215) ; et
le transfert des informations d'état à un autre dispositif électronique (250),
dans lequel les informations d'état comprennent un localisateur de ressources uniforme, URL, de la page Web (310), des données de cookie de l'URL et les informations de position collectées du défilement associées à la fenêtre d'affichage (320) dans la page Web (310).

6. Procédé selon la revendication 5, dans lequel les informations d'état comprennent en outre des données de formulaire.

7. Procédé selon la revendication 6, dans lequel l'élément est un texte dans une zone de texte en ligne.

8. Procédé selon la revendication 6, comprenant en outre le transfert des informations d'état du navigateur Web vers l'autre dispositif électronique en utilisant un message texte.
